# EUROPÄISCHE PATENTANMELDUNG

(11) **EP 4 252 544 A1**
(43) Veröffentlichungstag der Anmeldung: **04.10.2023**
(21) Anmeldenummer: 23162870.2
(22) Anmeldetag: 20.03.2023
(51) Int. Cl.: A23L 2/54, A47J 31/40

(54) **GETRÄNKESPRUDLER**

(30) Priorität: 31.03.2022 DE 102022107693
(71) Anmelder: Jahn GmbH Umform- und Zerspanungstechnik, 99897 Tambach-Dietharz (DE)
(72) Erfinder: JAHN, Andreas, 99897 Tambach-Dietharz (DE); ABE, Rico, 98597 Fambach (DE); ORTLEPP, Tobias, 98593 Floh-Seligenthal (DE); GLÄSER, Alexander, 98574 Schmalkalden OT Asbach (DE); STEHR, Harald, 99887 Georgenthal (DE)
(74) Vertreter: Liedtke & Partner Patentanwälte

(57) **Zusammenfassung**

Die Erfindung betrifft einen Getränkesprudler (1) mit einer Grundeinheit (3), wobei die Grundeinheit (3) aufweist:
- eine Mehrzahl von Druckbehälteraufnahmen (4) zur Aufnahme einer entsprechenden Anzahl von Druckbehältern (5), und
- eine Getränkebehälteraufnahme (6) zur Aufnahme eines Getränkebehälters (7).

## Beschreibung

Die Erfindung betrifft einen Getränkesprudler.

Aus dem Stand der Technik sind Getränkesprudler, auch als Wassersprudler oder Trinkwassersprudler bezeichnet, allgemein bekannt. Sie weisen eine Grundeinheit auf, in welche eine mit Kohlenstoffdioxid befüllte Gaskartusche und eine mit Wasser befüllte Flasche eingesetzt werden. Durch Betätigen einer Betätigungseinheit an der Grundeinheit wird das Kohlenstoffdioxid in die mit Wasser befüllte Flasche eingeleitet, wodurch das Wasser gesprudelt wird.

Der Erfindung liegt die Aufgabe zu Grunde, einen gegenüber dem Stand der Technik verbesserten Getränkesprudler anzugeben.

Die Aufgabe wird erfindungsgemäß gelöst durch einen Getränkesprudler mit den Merkmalen des Anspruchs 1.

Vorteilhafte Ausgestaltungen der Erfindung sind Gegenstand der Unteransprüche.

Ein erfindungsgemäßer Getränkesprudler, auch als Wassersprudler oder Trinkwassersprudler bezeichnet, weist eine Grundeinheit auf. Die Grundeinheit weist eine Mehrzahl von Druckbehälteraufnahmen zur Aufnahme einer entsprechenden Anzahl von Druckbehältern und eine Getränkebehälteraufnahme zur Aufnahme eines Getränkebehälters auf. In einer möglichen Ausführungsform weist die Grundeinheit zudem eine der Mehrzahl von Druckbehälteraufnahmen entsprechende Anzahl von Betätigungseinheiten auf, wobei jeder Druckbehälteraufnahme eine eigene Betätigungseinheit zugeordnet ist. Die jeweilige Betätigungseinheit ist zum Öffnen einer fluidischen Verbindung zwischen dem in der ihr zugeordneten Druckbehälteraufnahme angeordneten Druckbehälter und dem in der Getränkebehälteraufnahme angeordneten Getränkebehälter vorgesehen. Alternativ kann beispielsweise auch eine Betätigungseinheit für alle in den Druckbehälteraufnahmen angeordneten Druckbehälter vorgesehen sein. In diesem Fall ist beispielsweise jeder Druckbehälteraufnahme eine spezifische Betätigung dieser einen Betätigungseinheit zugeordnet. Die Betätigungseinheit ist dann, insbesondere durch die jeweilige spezifische Betätigung, zum Öffnen einer fluidischen Verbindung zwischen dem in der jeweiligen Druckbehälteraufnahme angeordneten Druckbehälter und dem in der Getränkebehälteraufnahme angeordneten Getränkebehälter vorgesehen.

Beispielsweise weist der Getränkesprudler mindestens oder genau zwei oder mindestens oder genau drei oder mindestens oder genau vier Druckbehälteraufnahmen auf. Er weist dann insbesondere auch eine entsprechende Anzahl von Betätigungseinheiten oder die eine Betätigungseinheit mit einer entsprechenden Anzahl spezifischer Betätigungsmöglichkeiten auf. Der jeweilige Druckbehälter wird auch als Druckgasbehälter, Gaskartusche, Zylinder oder Gaszylinder bezeichnet. Der Getränkebehälter ist insbesondere eine Flasche. Sind ein mit Gas, insbesondere mit Kohlenstoffdioxid, befüllter Druckbehälter und ein mit einem Getränk, insbesondere Wasser, insbesondere Trinkwasser, befüllter Getränkebehälter in der jeweiligen Aufnahme der Grundeinheit angeordnet, kann durch Betätigen der dem Druckbehälter zugeordneten Betätigungseinheit bzw. durch ein dem Druckbehälter zugeordnetes spezifisches Betätigen der für alle Druckbehälter vorgesehenen einen Betätigungseinheit an der Grundeinheit, wodurch die fluidische Verbindung zwischen diesem Druckbehälter und dem Getränkebehälter geöffnet wird, das Getränk im Getränkebehälter gesprudelt werden, da dann das Gas aus dem Druckbehälter in den Getränkebehälter einströmt.

Der erfindungsgemäße Getränkesprudler ist insbesondere für Druckbehälter mit unterschiedlichen Füllungen vorgesehen, insbesondere für Druckbehälter, die zusätzlich zum Gas, insbesondere Kohlenstoffdioxid, auch mit einem Aroma befüllt sind, wodurch das Getränk während des Sprudelns gleichzeitig aromatisiert wird. D. h. durch Betätigen der dem jeweiligen Druckbehälter zugeordneten Betätigungseinheit bzw. durch das dem jeweiligen Druckbehälter zugeordnete spezifische Betätigen der für alle Druckbehälter vorgesehenen einen Betätigungseinheit an der Grundeinheit, wodurch die fluidische Verbindung zwischen diesem Druckbehälter und dem Getränkebehälter geöffnet wird, wird das Getränk im Getränkebehälter gesprudelt und aromatisiert, da dann das Gas und das Aroma aus dem Druckbehälter in den Getränkebehälter einströmen. Durch die Mehrzahl von Druckbehälteraufnahmen können beispielsweise Druckbehälter mit verschiedenen Aromen und beispielsweise ein Druckbehälter ohne Aroma, d. h. nur mit Gas, im Getränkesprudler angeordnet werden, so dass einem Nutzer, insbesondere in dem Getränkesprudler, der nur eine relativ geringe Standfläche erfordert, eine entsprechende Auswahl zur Verfügung steht, ohne dass er hierfür erst einen bereits im Getränkesprudler angeordneten Druckbehälter gegen einen anderen austauschen muss.

In einer möglichen Ausführungsform ist die jeweilige Druckbehälteraufnahme schwenkbar mit der Grundeinheit gekoppelt. Dadurch kann der jeweilige Druckbehälter zur Entnahme aus der Grundeinheit seitlich, insbesondere schräg, aus dieser herausgeschwenkt werden und ein neuer Druckbehälter kann seitlich in die Druckbehälteraufnahme eingesetzt und dann in die Grundeinheit hineingeschwenkt werden. Es wird somit der Austausch des jeweiligen Druckbehälters erleichtert.

In einer möglichen Ausführungsform weist die Grundeinheit eine Schutzblende zum zumindest abschnittsweisen oder vollständigen Schließen eines Aufnahmeraums für den Getränkebehälter auf. Dies ist beispielsweise für Getränkebehälter aus Glas aus Sicherheitsgründen sinnvoll oder vorgeschrieben. Die Schutzblende ist beispielsweise beweglich, zum Beispiel schwenkbar, an der Grundeinheit befestigt, um ein Öffnen des Aufnahmeraums zum Einfügen und Entfernen des Getränkebehälters zu ermöglichen. Wenn die Grundeinheit diese Schutzblende aufweist, ist insbesondere vorgesehen, dass das Sprudeln nur dann möglich ist, wenn sich die Schutzblende in einer geschlossenen Stellung befindet, d. h. der Aufnahmeraum zumindest abschnittsweise oder vollständig durch die Schutzblende geschlossen ist. Beispielsweise ist somit vorgesehen, dass die jeweilige Betätigungseinheit oder die für alle Druckbehälter vorgesehene eine Betätigungseinheit nur dann betätigt werden kann, wenn sich die Schutzblende in der geschlossenen Stellung befindet.

In einer alternativen Ausführungsform ist keine solche Schutzblende vorgesehen. Diese Ausführungsform ist beispielsweise für Getränkebehälter aus Kunststoff vorgesehen, für welche eine solche Schutzblende nicht erforderlich ist.

In einer möglichen Ausführungsform weist die Grundeinheit einen Standfuß und ein Oberteil auf, die über mindestens ein Trägerelement miteinander verbunden sind. Die Druckbehälteraufnahmen und die Getränkebehälteraufnahme sind jeweils im Oberteil ausgebildet oder angeordnet. Beispielsweise sind auch die Betätigungseinheiten oder ist auch die eine Betätigungseinheit im Oberteil ausgebildet oder angeordnet.

In einer möglichen Ausführungsform weist die Grundeinheit mindestens ein Verkleidungsteil zum Schließen eines Aufnahmeraums für die Druckbehälter auf. Um einem Nutzer eine Zuordnung der Betätigungseinheiten oder der jeweiligen spezifischen Betätigung der einen Betätigungseinheit zu den Druckbehältern zu verdeutlichen, ist beispielsweise eine entsprechende Beschriftung oder andere Hinweisgestaltung an den Betätigungseinheiten oder an der einen Betätigungseinheit vorgesehen.

In einer möglichen Ausführungsform weist die Getränkebehälteraufnahme ein Gewinde zum Einschrauben eines korrespondierenden Getränkebehälteranschlussgewindes, welches am Getränkebehälter angeordnet oder ausgebildet ist, auf. Sie ist somit als ein Einschraubanschluss für den Getränkebehälter ausgebildet. Das Getränkebehälteranschlussgewinde ist insbesondere in einem oberen Bereich des Getränkebehälters angeordnet oder ausgebildet, beispielsweise an einem Flaschenhals des als Flasche ausgebildeten Getränkebehälters. Das Gewinde der Getränkebehälteraufnahme ist beispielsweise ein Innengewinde und das korrespondierende Getränkebehälteranschlussgewinde ein Außengewinde. Durch die Gewindelösung wird eine sichere Befestigung des Getränkebehälters am Getränkesprudler zum Sprudeln des Getränks ermöglicht.

In einer alternativen möglichen Ausführungsform ist zur Aufnahme des Getränkebehälters ein Bajonettverschluss vorgesehen. Die Getränkebehälteraufnahme weist somit einen Teil dieses Bajonettverschlusses zum Verbinden mit einem korrespondierenden Teil des Bajonettverschlusses auf, welcher am Getränkebehälter angeordnet oder ausgebildet ist, insbesondere im oberen Bereich des Getränkebehälters, beispielsweise am Flaschenhals des als Flasche ausgebildeten Getränkebehälters. Auch durch diese Bajonettveschlusslösung wird eine sichere Befestigung des Getränkebehälters am Getränkesprudler zum Sprudeln des Getränks ermöglicht.

In einer alternativen möglichen Ausführungsform ist zur Aufnahme des Getränkebehälters eine Rastverbindung vorgesehen. Die Getränkebehälteraufnahme weist somit einen Teil dieser Rastverbindung zum Verbinden mit einem korrespondierenden Teil der Rastverbindung auf, welcher am Getränkebehälter angeordnet oder ausgebildet ist, insbesondere im oberen Bereich des Getränkebehälters, beispielsweise am Flaschenhals des als Flasche ausgebildeten Getränkebehälters. Auch durch diese Rastverbindungslösung wird eine sichere Befestigung des Getränkebehälters am Getränkesprudler zum Sprudeln des Getränks ermöglicht.

In einer möglichen Ausführungsform ist vorgesehen, dass die jeweilige Druckbehälteraufnahme ein Gewinde zum Einschrauben eines korrespondierenden Druckbehälteranschlussgewindes, welches am jeweiligen Druckbehälter angeordnet oder ausgebildet ist, aufweist. In einer dazu alternativen möglichen Ausführungsform ist vorgesehen, dass die jeweilige Druckbehälteraufnahme eine Einrastaufnahme zum Einschieben und Einrasten eines korrespondierenden Druckbehälteranschlusses, welcher am jeweiligen Druckbehälter ausgebildet oder angeordnet ist, aufweist. Beispielsweise weisen hierfür die jeweilige Druckbehälteraufnahme und der jeweilige Druckbehälter zueinander korrespondierende Rastverbindungsteile auf. Durch beide Varianten wird eine stabile Aufnahme des jeweiligen Druckbehälters sichergestellt. Es können auch Druckbehälteraufnahmen der beiden Ausführungsformen am Getränkesprudler vorgesehen sein, beispielsweise um dadurch Druckbehälter mit diesen unterschiedlichen Druckbehälteranschlüssen im Getränkesprudler verwenden zu können.

In einer möglichen Ausführungsform weist der Getränkesprudler auch den Getränkebehälter auf. Dabei ist insbesondere vorgesehen, dass der Getränkebehälter in der Getränkebehälteraufnahme angeordnet ist.

In einer möglichen Ausführungsform weist der Getränkesprudler auch mindestens einen Druckbehälter oder mehrere Druckbehälter auf. Insbesondere entspricht eine Anzahl der Druckbehälter der Mehrzahl der Druckbehälteraufnahmen. Insbesondere ist in jeder Druckbehälteraufnahme ein Druckbehälter angeordnet.

Der insbesondere als Gaskartusche ausgebildete jeweilige Druckbehälter kann beispielsweise ein herkömmlicher, d. h. aus dem Stand der Technik bereits bekannter und insbesondere im Handel erhältlicher, Druckbehälter sein. Alternativ kann auch vorgesehen sein, dass ein aus dem Stand der Technik noch nicht bekannter jeweiliger Druckbehälter verwendet wird.

Der jeweilige Druckbehälter kann, wie oben bereits erwähnt, beispielsweise zusätzlich zum Gas, insbesondere Kohlenstoffdioxid, auch mit einem Aroma befüllt sein, um durch das Sprudeln das Getränk auch gleichzeitig zu aromatisieren. Dabei stehen bei dem hier beschriebenen Getränkesprudler mit mehreren Druckbehältern beispielsweise mehrere verschiedene Aromen zur Verfügung. Beispielsweise kann vorgesehen sein, dass eine Außenseite des jeweiligen Druckbehälters vollständig oder abschnittsweise mindestens eine farbige Markierung aufweist, die auf der Außenseite des jeweiligen Druckbehälters angeordnet oder ausgebildet ist. Diese farbige Markierung ist beispielsweise zur Erkennung des Aromas vorgesehen, welches im jeweiligen Druckbehälter eingefüllt ist, bzw. zur Erkennung, dass in dem jeweiligen Druckbehälter kein Aroma, sondern nur das Gas eingefüllt ist.

Der jeweilige Druckbehälter weist beispielsweise einen Behälterkörper mit einem an einem unteren Ende angeordneten und insbesondere einstückig und/oder einteilig mit dem Behälterkörper ausgebildeten Behälterboden auf. An einem oberen und somit dem Behälterboden gegenüberliegenden Ende weist der Behälterkörper einen Endbereich auf, welcher insbesondere einstückig und/oder einteilig mit dem Behälterkörper ausgebildet ist. Der Endbereich weist eine Behälteröffnung auf, in und/oder auf der ein Ventil angeordnet oder anordbar ist.

Ausführungsbeispiele der Erfindung werden im Folgenden anhand von Zeichnungen näher erläutert.

Darin zeigen:
- Figur 1: schematisch eine Rückseitenansicht eines Getränkesprudlers,
- Figur 2: schematisch eine Seitenansicht des Getränkesprudlers,
- Figur 3: schematisch eine perspektivische Darstellung des Getränkesprudlers ohne Verkleidungsteil, und
- Figur 4: schematisch eine perspektivische Darstellung des Getränkesprudlers.

Einander entsprechende Teile sind in allen Figuren mit den gleichen Bezugszeichen versehen.

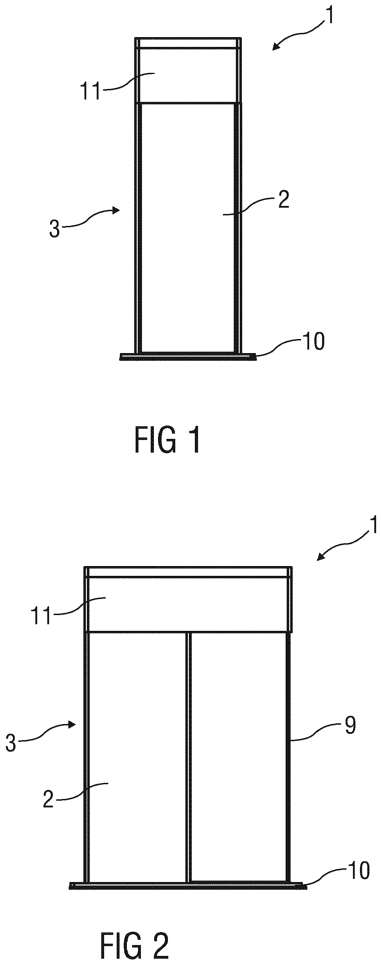

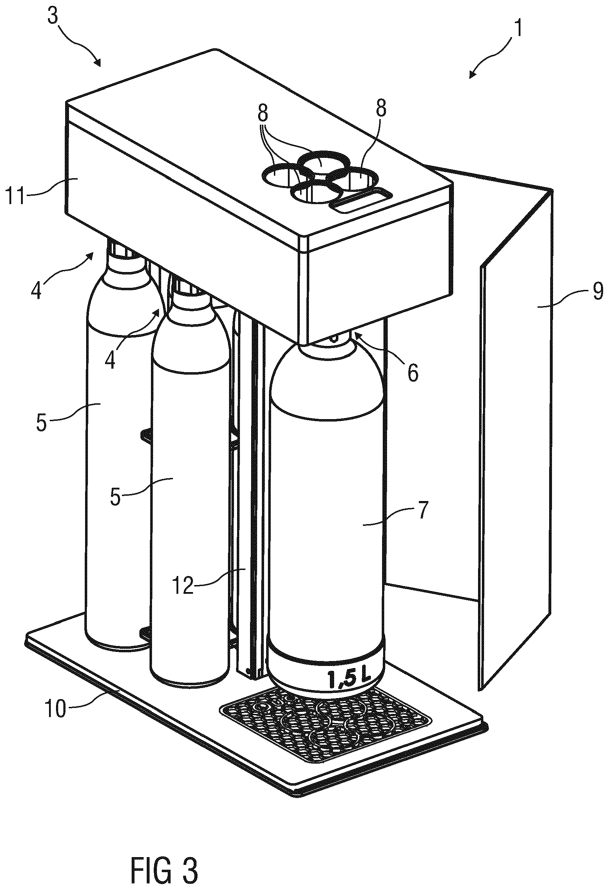

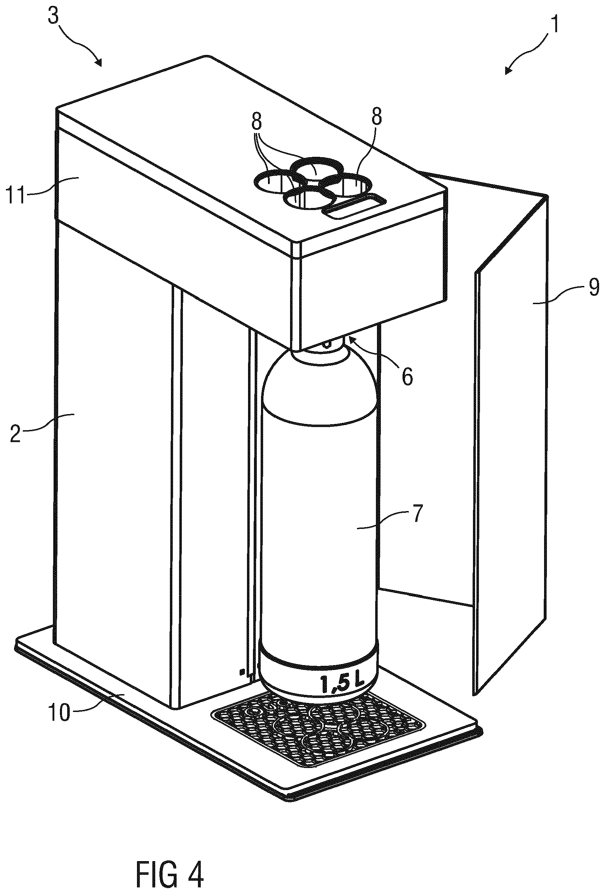

Die Figuren 1 bis 4 zeigen einen Getränkesprudler 1. Dabei zeigt Figur 1 den Getränkesprudler 1 in einer Rückseitenansicht und Figur 2 in einer Seitenansicht. Figur 3 zeigt eine perspektivische Darstellung des Getränkesprudlers 1 ohne Verkleidungsteil 2 und Figur 4 eine perspektivische Darstellung des Getränkesprudlers 1 mit Verkleidungsteil 2.

Der Getränkesprudler 1, auch als Wassersprudler oder Trinkwassersprudler bezeichnet, weist eine Grundeinheit 3 auf. Die Grundeinheit 3 weist eine Mehrzahl von Druckbehälteraufnahmen 4 zur Aufnahme einer entsprechenden Anzahl von Druckbehältern 5 auf, beispielsweise mindestens zwei oder mindestens drei Druckbehälteraufnahmen 4 zur Aufnahme einer entsprechenden Anzahl von Druckbehältern 5. Im dargestellten Beispiel weist die Grundeinheit 3 vier Druckbehälteraufnahmen 4 zur Aufnahme von vier Druckbehältern 5 auf.

Des Weiteren weist die Grundeinheit 3 eine Getränkebehälteraufnahme 6 zur Aufnahme eines Getränkebehälters 7 auf.

Zudem weist die Grundeinheit 3 im dargestellten Beispiel eine der Mehrzahl von Druckbehälteraufnahmen 4 entsprechende Anzahl von Betätigungseinheiten 8 auf, im dargestellten Beispiel somit vier Betätigungseinheiten 8, wobei jeder Druckbehälteraufnahme 4 eine eigene Betätigungseinheit 8 zugeordnet ist, insbesondere umfassend einen jeweiligen Betätigungsknopf. Die jeweilige Betätigungseinheit 8 ist zum Öffnen einer fluidischen Verbindung zwischen dem in der ihr zugeordneten Druckbehälteraufnahme 4 angeordneten Druckbehälter 5 und dem in der Getränkebehälteraufnahme 6 angeordneten Getränkebehälter 7 vorgesehen.

Der jeweilige Druckbehälter 5 wird auch als Druckgasbehälter, Gaskartusche, Zylinder oder Gaszylinder bezeichnet. Der Getränkebehälter 7 ist insbesondere eine Flasche. Sind ein mit Gas, insbesondere mit Kohlenstoffdioxid, befüllter Druckbehälter 5 und ein mit einem Getränk, insbesondere Wasser, insbesondere Trinkwasser, befüllter Getränkebehälter 7 in der jeweiligen Aufnahme der Grundeinheit 3 angeordnet, kann durch Betätigen der dem Druckbehälter 5 zugeordneten Betätigungseinheit 8 an der Grundeinheit 3, wodurch die fluidische Verbindung zwischen diesem Druckbehälter 5 und dem Getränkebehälter 7 geöffnet wird, das Getränk im Getränkebehälter 7 gesprudelt werden, da dann das Gas aus dem Druckbehälter 5 in den Getränkebehälter 7 einströmt.

Der Getränkesprudler 1 ist insbesondere für Druckbehälter 5 mit unterschiedlichen Füllungen vorgesehen, insbesondere für Druckbehälter 5, die zusätzlich zum Gas, insbesondere Kohlenstoffdioxid, auch mit einem Aroma befüllt sind, wodurch das Getränk während des Sprudelns gleichzeitig aromatisiert wird. D. h. durch Betätigen der dem jeweiligen Druckbehälter 5 zugeordneten Betätigungseinheit 8 an der Grundeinheit 3, wodurch die fluidische Verbindung zwischen diesem Druckbehälter 5 und dem Getränkebehälter 7 geöffnet wird, wird das Getränk im Getränkebehälter 7 gesprudelt und aromatisiert, da dann das Gas und das Aroma aus dem Druckbehälter 5 in den Getränkebehälter 7 einströmen. Durch die Mehrzahl von Druckbehälteraufnahmen 4 können beispielsweise Druckbehälter 5 mit verschiedenen Aromen und beispielsweise ein Druckbehälter 5 ohne Aroma, d. h. nur mit Gas, im Getränkesprudler 1 angeordnet werden, so dass einem Nutzer eine entsprechende Auswahl zur Verfügung steht, ohne dass er hierfür erst einen bereits im Getränkesprudler 1 angeordneten Druckbehälter 5 gegen einen anderen austauschen muss.

Die jeweilige Druckbehälteraufnahme 4 ist insbesondere schwenkbar mit der Grundeinheit 3 gekoppelt. Dadurch kann der jeweilige Druckbehälter 5 zur Entnahme aus der Grundeinheit 3 seitlich, insbesondere schräg, aus dieser herausgeschwenkt werden und ein neuer Druckbehälter 5 kann seitlich in die Druckbehälteraufnahme 4 eingesetzt und dann in die Grundeinheit 3 hineingeschwenkt werden. Es wird somit der Austausch des jeweiligen Druckbehälters 5 erleichtert.

Die Grundeinheit 3 weist in der dargestellten Ausführungsform eine Schutzblende 9 zum zumindest abschnittsweisen oder vollständigen Schließen eines Aufnahmeraums für den Getränkebehälter 7 auf. Dies ist beispielsweise für Getränkebehälter 7 aus Glas aus Sicherheitsgründen sinnvoll oder vorgeschrieben. Die Schutzblende 9 ist, wie in den Figuren 3 und 4 gezeigt, beispielsweise beweglich, zum Beispiel schwenkbar, an der Grundeinheit 3 befestigt, um ein Öffnen des Aufnahmeraums zum Einfügen und Entfernen des Getränkebehälters 7 zu ermöglichen. Es ist insbesondere vorgesehen, dass das Sprudeln nur dann möglich ist, wenn sich die Schutzblende 9 in einer geschlossenen Stellung befindet, d. h. der Aufnahmeraum zumindest abschnittsweise oder vollständig durch die Schutzblende 9 geschlossen ist. Beispielsweise ist somit vorgesehen, dass die jeweilige Betätigungseinheit 8 nur dann betätigt werden kann, wenn sich die Schutzblende 9 in der geschlossenen Stellung befindet.

In einer nicht dargestellten alternativen Ausführungsform ist keine solche Schutzblende 9 vorgesehen. Diese Ausführungsform ist beispielsweise für Getränkebehälter 7 aus Kunststoff vorgesehen, für welche eine solche Schutzblende 9 nicht erforderlich ist.

Die Grundeinheit 3 weist einen Standfuß 10 und ein Oberteil 11 auf, die über mindestens ein Trägerelement 12 miteinander verbunden sind. Die Druckbehälteraufnahmen 4, die Betätigungseinheiten 8 und die Getränkebehälteraufnahme 6 sind jeweils im Oberteil 11 ausgebildet oder angeordnet.

In der dargestellten Ausführungsform weist die Grundeinheit 3 das oben bereits erwähnte Verkleidungsteil 2 zum Schließen eines Aufnahmeraums für die Druckbehälter 5 auf.

In der dargestellten Ausführungsform weist der Getränkesprudler 1 auch den Getränkebehälter 7 auf, welcher hier bereits in der Getränkebehälteraufnahme 6 angeordnet ist.

In der dargestellten Ausführungsform weist der Getränkesprudler 1 auch die vier Druckbehälter 5 auf, welche hier bereits in der jeweiligen Druckbehälteraufnahme 4 angeordnet sind.

### BEZUGSZEICHENLISTE

- 1: Getränkesprudler
- 2: Verkleidungsteil
- 3: Grundeinheit
- 4: Druckbehälteraufnahme
- 5: Druckbehälter
- 6: Getränkebehälteraufnahme
- 7: Getränkebehälter
- 8: Betätigungseinheit
- 9: Schutzblende
- 10: Standfuß
- 11: Oberteil
- 12: Trägerelement

## Patentansprüche

1. Getränkesprudler (1) mit einer Grundeinheit (3), wobei die Grundeinheit (3) aufweist:
- eine Mehrzahl von Druckbehälteraufnahmen (4) zur Aufnahme einer entsprechenden Anzahl von Druckbehältern (5), und
- eine Getränkebehälteraufnahme (6) zur Aufnahme eines Getränkebehälters (7).

2. Getränkesprudler (1) nach Anspruch 1,
wobei die Grundeinheit (3) eine der Mehrzahl von Druckbehälteraufnahmen (4) entsprechende Anzahl von Betätigungseinheiten (8) aufweist, wobei jeder Druckbehälteraufnahme (4) eine eigene Betätigungseinheit (8) zugeordnet ist und wobei die jeweilige Betätigungseinheit (8) zum Öffnen einer fluidischen Verbindung zwischen dem in der ihr zugeordneten Druckbehälteraufnahme (4) angeordneten Druckbehälter (5) und dem in der Getränkebehälteraufnahme (6) angeordneten Getränkebehälter (7) vorgesehen ist.

3. Getränkesprudler (1) nach einem der vorhergehenden Ansprüche,
wobei mindestens zwei oder mindestens drei Druckbehälteraufnahmen (4) oder mindestens vier Druckbehälteraufnahmen (4) vorgesehen sind.

4. Getränkesprudler (1) nach einem der vorhergehenden Ansprüche,
wobei die jeweilige Druckbehälteraufnahme (4) schwenkbar mit der Grundeinheit (3) gekoppelt ist.

5. Getränkesprudler (1) nach einem der vorhergehenden Ansprüche,
wobei die Grundeinheit (3) eine Schutzblende (9) zum zumindest abschnittsweisen Schließen eines Aufnahmeraums für den Getränkebehälter (7) aufweist.

6. Getränkesprudler (1) nach einem der vorhergehenden Ansprüche,
wobei die Grundeinheit (3) einen Standfuß (10) und ein Oberteil (11) aufweist, die über mindestens ein Trägerelement (12) miteinander verbunden sind.

7. Getränkesprudler (1) nach Anspruch 6,
wobei die Druckbehälteraufnahmen (4) und die Getränkebehälteraufnahme (6) jeweils im Oberteil (11) ausgebildet oder angeordnet sind.

8. Getränkesprudler (1) nach einem der vorhergehenden Ansprüche,
wobei die Grundeinheit (3) mindestens ein Verkleidungsteil (2) zum Schließen eines Aufnahmeraums für die Druckbehälter (5) aufweist.

9. Getränkesprudler (1) nach einem der vorhergehenden Ansprüche,
wobei die Getränkebehälteraufnahme (6) ein Gewinde zum Einschrauben eines korrespondierenden Getränkebehälteranschlussgewindes, welches am Getränkebehälter (7) angeordnet oder ausgebildet ist, aufweist.

10. Getränkesprudler (1) nach einem der vorhergehenden Ansprüche,
wobei die jeweilige Druckbehälteraufnahme (4) aufweist:
- ein Gewinde zum Einschrauben eines korrespondierenden Druckbehälteranschlussgewindes, welches am Druckbehälter (5) angeordnet oder ausgebildet ist, oder
- eine Einrastaufnahme zum Einrasten eines korrespondierenden Druckbehälteranschlusses, welcher am Druckbehälter (5) ausgebildet oder angeordnet ist.

11. Getränkesprudler (1) nach einem der vorhergehenden Ansprüche,
wobei der Getränkebehälter (7) in der Getränkebehälteraufnahme (6) angeordnet ist und/oder in jeder Druckbehälteraufnahme (4) ein Druckbehälter (5) angeordnet ist.
